# EUROPÄISCHE PATENTSCHRIFT

(11) **EP 2 742 790 B1**
(45) Veröffentlichungstag und Bekanntmachung des Hinweises auf die Patenterteilung: **16.12.2015**
(21) Anmeldenummer: 13005003.2
(22) Anmeldetag: 18.10.2013
(51) Int. Cl.: A01C 17/00, A01C 15/00

(54) **Verteilmaschine**
Distribution machine
Machine d'épandage

(30) Priorität: 13.12.2012 DE 102012024363
(43) Veröffentlichungstag der Anmeldung: 18.06.2014
(73) Patentinhaber: RAUCH Landmaschinenfabrik GmbH, 76547 Sinzheim (DE)
(72) Erfinder: Rauch, Norbert, 76547 Sinzheim (DE)
(74) Vertreter: Lenz, Steffen

(56) Entgegenhaltungen:
- DE-A1- 3 911 584
- DE-A1- 4 020 574
- DE-A1-102005 015 228
- DE-A1-102007 053 550

## Beschreibung

Die Erfindung betrifft eine Verteilmaschine, insbesondere landwirtschaftliche Streumaschine oder Winterdienststreumaschine, mit
- wenigstens einem Behälter zur Aufnahme von pulver- und/oder partikelförmigem Streugut;
- wenigstens einer an der Unterseite des Behälters angeordneten Auslauföffnung;
- wenigstens einer, mit der Auslauföffnung zusammenwirkenden Dosiereinrichtung mit einem, mit einer Dosieröffnung ausgestatteten Dosierteil und einem mit der Dosieröffnung zusammenwirkenden Dosierschieber, um die Dosieröffnung in einer Schließstellung des Dosierschiebers gänzlich zu verschließen und in wenigstens einer Öffnungsstellung des Dosierschiebers zumindest teilweise freizugeben;
- wenigstens einem unterhalb der Auslauföffnung und der Dosiereinrichtung angeordneten Verteilorgan; und
- wenigstens einer Einrichtung zur Verstellung des Aufgabepunktes des Streugutes auf das Verteilorgan mit wenigstens einem Aktuator, welcher zur Hin- und Herbewegung des mit der Dosieröffnung ausgestatteten Dosierteils der Dosiereinrichtung relativ zu dem Verteilorgan ausgebildet ist;
wobei zumindest der Aktuator der Einrichtung zur Verstellung des Aufgabepunktes mit einer programmtechnisch eingerichteten Steuereinheit in Wirkverbindung steht.

Verteilmaschinen der vorgenannten Art sind einerseits in Form von landwirtschaftlichen Streumaschinen zum Ausbringen von pulver- oder partikelförmigen Gut, wie insbesondere Dünger oder Saatgut, in vielfältiger Ausgestaltung bekannt, so beispielsweise in gezogener oder von einem Dreipunkt einer Zugmaschine, wie eines Traktors, aufgenommener Bauart. Derartige Verteilmaschinen umfassen einen das zu verteilende Gut aufnehmenden Behälter, an dessen Unterseite üblicherweise eine oder zwei Auslauföffnungen angeordnet sind, wobei der jeweiligen Auslauföffnung eine Dosiereinrichtung zugeordnet ist, um das auszubringende Gut in der gewünschten Menge - oder genauer: mit dem gewünschten Massenstrom - dem Behälter zu entnehmen. Die üblicherweise unterhalb der Auslauföffnung positionierte Dosiereinrichtung ist in der Regel mittels eines geeigneten Stellorgans auf- und zusteuerbar, um je nach gewünschter Verteilungsbreite des auszubringenden Gutes auf dem Boden, je nach Fahrgeschwindigkeit und je nach den physikalischen Eigenschaften des Streugutes, wie beispielsweise dessen Rieselfähigkeit, den gewünschten Massenstrom einstellen zu können. Unterhalb der Dosiereinrichtung befindet sich ein Verteilorgan, mittels welchem das pulver- oder partikelförmige Gut über die gewünschte Arbeitsbreite verteilt wird. Manche Verteilmaschinen sind überdies mit einer Einrichtung zur Verstellung des Aufgabepunktes des pulver- und/oder partikelförmigen Gutes auf das, insbesondere von einer mit Wurfschaufeln bestückten Verteilerscheibe gebildeten, Verteilorgan ausgestattet, wobei der Aufgabepunkt in Bezug auf das Verteilorgan radial (insbesondere zu Vergrößerung/Verkleinerung des Streufächers) und/oder in Umfangsrichtung (insbesondere zum Verdrehen des Streufächers etwa um die Drehachse des Verteilorgans) verstellbar sein kann. Die Einrichtung zur Verstellung des Aufgabepunktes weist hierbei in der Regel einen oder mehrere Aktuatoren auf, welcher zur Hin- und Herbewegung des mit der Dosieröffnung ausgestatteten Dosierteils der Dosiereinrichtung relativ zu dem Verteilorgan - und somit auch relativ zu der im Allgemeinen stationär in Bezug auf den Behälter angeordneten Auslauföffnung ausgebildet ist, wobei diese Hin- und Herbewegung, wie oben erwähnt, eine translatorische und/oder eine rotatorische Bewegung sein kann. Die Steuerung bzw. Regelung des Aktuators der Einrichtung zur Verstellung des Aufgabepunktes in Abhängigkeit der gewünschten Verteilungsbreite übernimmt eine programmtechnisch eingerichtete Steuereinheit der Verteilmaschine, welche üblicherweise mit wenigstens einem Bedienmodul in Wirkverbindung, welches beispielsweise im Führerhaus einer Zugmaschine, wie eines Traktors, angeordnet sein kann. Entsprechendes gilt in der Regel für die Steuerung bzw. Regelung des Dosierorgans in Abhängigkeit von dem gewünschten Massenstrom des auszubringenden Streugutes.

Eine derartige landwirtschaftliche Verteilmaschine ist beispielsweise aus der DE 41 34 315 A1 bekannt. Bei dieser Verteilmaschine in Form eines Zweischeibenstreuers weist der Behälter zwei Behälterteile auf, welche sich etwa trichterförmig nach unten verjüngen. An der Unterseite der Behälterteile sind diese offen ausgebildet, so dass sie jeweils in einer etwa kreisförmigen Auslauföffnung enden. Unterhalb einer jeden Auslauföffnung der Behälterteile ist eine Dosiereinrichtung derart an der Unterseite der Behälterteile befestigt, dass ein etwa topfförmiges Dosierteil, welches mit einer mit einem Dosierschieber zusammenwirkenden Dosieröffnung ausgestattet ist, mittels einer Einrichtung zur Verstellung des Aufgabepunktes des Streugutes auf die Verteilerscheiben um eine vertikale Achse verdreht werden kann, so dass das Dosierteil mit der exzentrisch zur Drehachse angeordneten Dosieröffnung relativ zu dem Verteilorgan sowie auch relativ zu der demgegenüber größeren Auslauföffnung an der jeweiligen Unterseite der Behälterteile verdreht werden kann und das Streugut folglich einem veränderten Umfangsbereich auf die Verteilerscheiben aufgegeben werden kann. Ein Rührwerk ist oberhalb einer jeden Auslauföffnung des Behälters angeordnet und an einem im Innern des Behälters festgelegten Gestänge gelagert.

Eine ebenfalls in Form eines Zweischeibenstreuers ausgebildete landwirtschaftliche Verteilmaschine der oben genannten Art ist ferner beispielsweise der DE 10 2007 053 550 A1 zu entnehmen. Sie unterscheidet sich von der Verteilmaschine gemäß der DE 41 34 315 A1 vornehmlich durch die Geometrie einerseits der Auslauföffnung, andererseits der Dosiereinrichtung. Erstere ist in einem an der Unterseite eines jeden Behälterteils befestigten Boden vorgesehen und erstreckt sich somit nur über einen Teil des Querschnittes des jeweiligen, nach unten verjüngten Behälterteils. Unterhalb des mit der Auslauföffnung versehenen Bodens des Behälters ist wiederum die Dosiereinrichtung angeordnet, welche in diesem Fall ein etwa plattenförmiges Dosierteil umfasst, das mit einer mit einem Dosierschieber zusammenwirkenden Dosieröffnung ausgestattet ist. Ähnlich der vorgenannten DE 41 34 315 A1 dient eine Einrichtung zur Verstellung des Aufgabepunktes des Streugutes auf die Verteilerscheiben zum Verdrehen des - hier plattenförmigen - Dosierteils um eine vertikale Achse, so dass das Dosierteil mit seiner exzentrisch zur Drehachse angeordneten Dosieröffnung relativ zu dem Verteilorgan sowie auch relativ zu der demgegenüber größeren Auslauföffnung entlang deren Erstreckungsrichtung im jeweiligen Boden der Behälterteile verdreht werden kann und das Streugut folglich einem veränderten Umfangsbereich auf die Verteilerscheiben aufgegeben werden kann. An dem nicht mit der Auslauföffnung versehenen Abschnitt des Behälterbodens ist ein Rührwerk gelagert.

Im Falle von Winterdienststreumaschinen dient der Behälter vornehmlich zur Aufnahme von in der Regel granulatförmigem Splitt und/oder Streusalz, wobei die Funktion einer solchen Winterdienststreumaschine weitestgehend der einer oben beschriebenen landwirtschaftlichen Streumaschine entspricht.

Aus Umweltschutzgründen und insbesondere zur Minimierung der anfallenden Menge von zu entsorgenden Stoffen, wie beispielsweise Mineraldünger oder Streusalz, auf dem landwirtschaftlichen oder kommunalen Betriebshof besteht ein Bedarf dahingehend, nach der Streuarbeit in dem Behälter verbleibende Reste an Streugut entweder vor Ort, d.h. auf dem Feld oder auf der Straße möglichst vollständig auszustreuen oder solche Reste an Streugut auf dem landwirtschaftlichen oder kommunalen Betriebshof aufzusammeln und in entsprechende Vorratsbehälter, wie Lager oder Silos, zurückzuführen. In diesem Zusammenhang sei darauf hingewiesen, dass insbesondere gattungsgemäße Verteilmaschinen für den landwirtschaftlichen Einsatz häufig Behälter mit einem Fassungsvermögen von mehreren 1000 1 aufweisen, wobei nicht unerhebliche Mengen an Streugutresten am Grund des Behälters zurückbleiben können. Die Entfernung solcher Streugutreste im Rahmen einer Behälterreinigung hat es bislang erfordert, z.B. über eine an dem Behälter angelenkte Leiter in den Behälter hineinzusteigen, um das Streugut beispielsweise mittels eines Besen oder dergleichen aus dem Behälter herauszufegen. Dies ist einerseits relativ aufwändig und unbequem, andererseits kann dies durchaus eine nicht unerhebliche Unfallgefahr darstellen. Insoweit sei auf die DE 20 2008 013 948 U1 verwiesen.
Die DE 10 2005 015 228 A1 begegnet diesem Problem teilweise durch die spezielle Geometrie der mit dem Rührwerk ausgestatteten Auslauföffnung des Behälterbodens in Verbindung mit dem unterhalb der Auslauföffnung befindlichen, mit der Dosieröffnung versehenen, plattenförmigen Dosierteil der Dosiereinrichtung, wobei vorgesehen ist, dass der mit der Auslauföffnung ausgestattete Boden an der Unterseite des Behälters einen etwa "V"-förmigen Umfang mit abgerundetem "V"-Scheitel aufweist, wobei der Krümmungsradius des "V"-Scheitels etwa deckungsgleich mit dem Wirkkreis der Rührfinger des Rührwerks und die Auslauföffnung in dem dem "V"-Scheitel gegenüberliegenden, erweiterten Bereich des "V"-förmigen Bodens angeordnet ist. Das Rührwerk vermag folglich im Bereich des "V"-Scheitels zurückgebliebenes Streugut in Richtung der Auslauföffnung zu fördern, was in einer Reduzierung der zurückbleibenden Restmenge an Streugut führt, sofern das Streugut durch die mit einem Abschnitt der Auslauföffnung in Deckung befindliche Dosieröffnung des Dosierteils hindurchfallen zu vermag. Indes verbleiben auch bei einer solchen Ausgestaltung nicht zu vernachlässigende Restmengen an Streugut in dem Behälter zurück, welche sich insbesondere auf der dem Behälter bzw. dessen Auslauföffnung zugewandten Oberseite des Dosierteils der Dosiereinrichtung anreichern und insbesondere unter Einwirkung von Feuchtigkeit, wie sie während des Einsatzes im Freiland praktisch immer vorhanden ist, in Form von Aggregationen und Anhaftungen von mehr oder minder großen Streugutklumpen vorliegen können, zumal viele Streugutarten, wie z.B. Mineraldünger oder Streusalz, einen mehr oder minder stark hygroskopischen Charakter besitzen.

Der Erfindung liegt daher die Aufgabe zugrunde, eine Verteilmaschine der eingangs genannten Art auf einfache und kostengünstige Weise dahingehend weiterzubilden, dass unter zumindest weitestgehender Vermeidung der vorgenannten Nachteile die nach der Streuarbeit in dem Behälter zurückbleibende Restmenge an Streugut so weit wie möglich reduziert wird.

Erfindungsgemäß wird diese Aufgabe bei einer Verteilmaschine der eingangs genannten Art dadurch gelöst, dass die Steuereinheit den Aktuator der Einrichtung zur Verstellung des Aufgabepunktes zu einer wenigstens einmaligen Hin- und Herbewegung veranlasst, um das mit der Dosieröffnung ausgestattete Dosierteil zwischen zwei verschiedenen Positionen relativ zu der Auslauföffnung hin und her zu verlagern,
- wenn die Steuereinheit einen entsprechenden, in ein Bedienmodul der Steuereinheit eingegebenen Befehl empfängt; und/oder
- wenn eine mit der Steuereinheit in Wirkverbindung stehende Füllstandserfassungs- und/oder Massenstromerfassungseinrichtung detektiert hat, dass der Behälter entleert worden ist und/oder bei geöffnetem Dosierschieber ein allenfalls kleiner oder kein Massenstrom an Streugut die Dosieröffnung durchsetzt.

Die Erfindung sieht folglich vor, dass einerseits bedarfsweise - auf einen in das Bedienmodul eingegebenen Befehl, welcher beispielsweise sinngemäß "Restmenge entleeren" oder dergleichen lauten kann - die Steuereinheit den Aktuator der Einrichtung zur Verstellung des Aufgabepunktes zu einer wenigstens einmaligen Hin- und Herbewegung veranlasst, so dass das mit der Dosieröffnung versehene Dosierteil der Dosiereinrichtung zwischen zwei verschiedenen Positionen relativ zu der - in Bezug auf die Dosieröffnung größeren - Auslauföffnung an der Unterseite des Behälters hin und her verlagert und die Dosieröffnung somit über zumindest einen Teil der Auslauföffnung hinweg bewegt wird (oder genauer: etwa parallel zur Erstreckungsebene der Auslauföffnung unterhalb derselben), um es dort befindlichen Restmengen an Streugut zu ermöglichen, durch die hin und her verlagerte Dosieröffnung des Dosierteils aus dem Behälter herauszufallen. Auf diese Weise ist nicht nur eine wirksame Restmengenentleerung von auf dem unterhalb der Auslauföffnung des Behälters befindlichen Dosierteil der Dosiereinrichtung zurückgebliebenem Streugut sichergestellt, sondern die erfindungsgemäße Ausgestaltung erweist sich überdies als höchst einfach und kostengünstig, da die ohnehin vorhandene Einrichtung zur Verstellung des Aufgabepunktes "zweckentfremdet" genutzt werden kann, so dass zur Implementierung der Erfindung im Grunde lediglich eine entsprechende programmtechnische Modifikation der Steuereinheit erforderlich ist.

Andererseits kann alternativ oder zusätzlich zur bedarfsweisen Aktivierung der erfindungsgemäßen Restmengenentleerung durch einen in ein Bedienmodul der Steuereinheit eingegebenen Befehl vorgesehen sein, dass die Restmengenentleerung automatisch erfolgt, d.h. die Steuereinheit veranlasst den Aktuator der Einrichtung zur Verstellung des Aufgabepunktes zu einer wenigstens einmaligen Hin- und Herbewegung, um das mit der Dosieröffnung ausgestattete Dosierteil zwischen zwei verschiedenen Positionen relativ zu der Auslauföffnung hin und her zu verlagern, wenn eine mit der Steuereinheit in Wirkverbindung stehende Füllstandserfassung- und/oder Massenstromerfassungseinrichtung detektiert hat, dass der Behälter entleert worden ist und/oder bei geöffnetem Dosierschieber ein allenfalls mininaler oder kein Massenstrom an Streugut die Dosieröffnung durchsetzt. Wie nachfolgend beschrieben, sind derartige Füllstands- und Massenstromerfassungseinrichtungen gattungsgemäßer Verteilmaschinen in vielfältiger Ausgestaltung bekannt.

So kann in vorteilhafter Ausgestaltung vorgesehen sein, dass die Füllstands- und/oder Massenstromerfassungseinrichtung aus der Gruppe
- Behälterwaage;
- Drehmomentsensor, welcher das Drehmoment wenigstens einer Welle im Antriebsstrang des Verteilorgans erfasst;
- Torsionssensor, welcher die Torsion wenigstens einer Welle im Antriebsstrang des Verteilorgans erfasst;
- Drucksensor, welcher den Druck in einem hydraulischen Antriebsstrang eines hydraulischen Antriebs des Verteilorgans erfasst; und
- Strom- oder Spannungssensor, welcher die Stromstärke oder die Spannung an einem elektrischen Antrieb des Verteilorgans erfasst,
gewählt ist. Bei der Füllstandserfassungseinrichtung kann es sich demnach einerseits um eine Behälterwaage handeln, welche mit der Steuereinheit in Wirkverbindung steht, so dass letztere des erfindungsgemäßen Restmengenentleervorgang veranlasst, sobald sie erkannt hat, dass die Behälterwaage einen leeren Behälter detektiert hat. Derartige Behälterwaagen sind bekannt und können zum Einen als lediglich statische Füllstandsanzeigen dienen, oder sie können einen Teil des Regelkreises des Dosiervorgangs in Abhängigkeit der Arbeitsbreite, der Fahrtgeschwindigkeit und insbesondere der physikalischen Eigenschaften des Streugutes bilden, wie es beispielsweise aus den EP 0 537 857 B1, EP 0 674 831 B1 oder EP 0 982 571 B1 bekannt ist. Andererseits kann die Massenstromerfassungseinrichtung einen oder mehrere Drehmoment- und/oder Torsionssensor(en) umfassen, welche(r) das Drehmoment wenigstens einer Welle im Antriebsstrang des Verteilorgans erfasst/erfassen, wobei derartige Sensoren einen unbelasteten Zustand des Verteilorgans erkennen können (wenn der Behälter leer ist, gelangt kein oder nur noch sehr wenig Streugut durch die offene Dosieröffnung hindurch auf das Verteilorgan; das Drehmoment nimmt folglich mehr oder minder schlagartig ab) und gleichfalls mit der Steuereinheit in Wirkverbindung stehen. Derartige Sensoren können gleichfalls einen Teil des Regelkreises des Dosiervorgangs in Abhängigkeit der Arbeitsbreite, der Fahrtgeschwindigkeit und insbesondere der physikalischen Eigenschaften des Streugutes bilden, wie es beispielsweise aus der EP 1 008 288 B1, EP 0 963 690 A1 oder aus der zum Prioritätstag der vorliegenden Anmeldung noch nicht veröffentlichten DE 10 2012 002 585.8 bekannt ist. Sofern das/die Verteilorgan(e) einen hydraulischen Antrieb mit einem oder mehreren Hydromotoren aufweist/aufweisen, ist es überdies denkbar, dass die Massenstromerfassungseinrichtung einen oder mehrere Drucksensor(en) umfasst, welche(r) den Druck in einem hydraulischen Antriebsstrang eines hydraulischen Antriebs des Verteilorgans erfasst/erfassen, wobei z.B. ein Drucksensor stromauf und ein Drucksensor stromab des Hydromotors angeordnet ist. Derartige Drucksensoren vermögen in ähnlicher Weise wie die vorgenannten Drehmoment- oder Torsionssensoren einen unbelasteten Zustand des Verteilorgans zu erkennen (wenn der Behälter leer ist, gelangt kein oder nur sehr wenig Streugut durch die geöffnete Dosieröffnung hindurch auf das Verteilorgan; der Druckverlust in dem hydraulischen Antriebsstrang nimmt folglich mehr oder minder schlagartig ab), wobei sie gleichfalls mit der Steuereinheit in Wirkverbindung stehen können. Auch sie können einen Teil des Regelkreises des Dosiervorgangs in Abhängigkeit der Arbeitsbreite, der Fahrtgeschwindigkeit und insbesondere der physikalischen Eigenschaften des Streugutes bilden, wie es beispielsweise aus der DE 44 17 549 C2, EP 0 945 548 A2 oder EP 0 963 690 A1 bekannt ist. Entsprechendes gilt für Strom- oder Spannungssensoren, welche die Stromstärke oder die Spannung an einem elektrischen Antrieb des Verteilorgans erfassen, wobei die Stromstärke und/oder die Spannung eines solchen elektrischen Antriebs gleichfalls für das durch den Massenstrom an auftreffendem Streugut auf das Verteilorgan bewirkte Drehmoment des Verteilorgans repräsentativ sind. Darüber hinaus sind auch andere, z.B. optische, Ultraschall-, elektromagnetische Sensoren oder dergleichen, denkbar, welche den Abwurfbereich erfassen, in welchem die Streugutpartikel üblicherweise die Verteilorgane verlassen. Derartige Sensoren sind beispielsweise aus der DE 197 23 359 A1 bekannt.

Sofern die Verteilmaschine eine solche Füllstands- und/oder Massenstromerfassungseinrichtung aufweist und die Steuereinheit ein Bedienmodul umfasst, in welches ein entsprechender Befehl eingegeben werden kann, um den Restmengenentleervorgang zu befehligen, kann es ferner zweckmäßig sein, wenn die Steuereinheit den Restmengenentleervorgang unterdrückt oder zumindest, bevor sie diesen veranlasst, eine - z.B. optische und/oder akustische - Warnmeldung generiert, wenn sie einen solchen Befehl empfängt, aber die Füllstands- und/oder Massenstromerfassungseinrichtung zugleich einen zumindest noch teilweise befüllten Behälter detektiert.

In vorteilhafter Ausgestaltung kann vorgesehen sein, dass die Steuereinheit den Aktuator der Einrichtung zur Verstellung des Aufgabepunktes (wie oben erwähnt, bedarfsweise und/oder automatisch) zu einer mehrmaligen, insbesondere wenigstens zweimaligen, vorzugsweise wenigstens dreimaligen, Hin- und Herbewegung veranlasst, um das mit der Dosieröffnung ausgestattete Dosierteil mehrmals zwischen den beiden verschiedenen Positionen hin und her zu verlagern. Das mit dem Aktuator verbundene, mit der Dosieröffnung versehene Dosierteil der Dosiereinrichtung lässt sich folglich auf einen entsprechenden Steuerbefehl der Steuereinheit mehrmals zwischen zwei Positionen hin und her verlagern, so dass auch relativ stark anhaftende bzw. angebackene Reste an Streugutaggregationen mechanisch gelöst werden können, um durch die hin und her bewegte Dosieröffnung abgeführt zu werden.

In zweckmäßiger Ausführung veranlasst die Steuereinheit den Aktuator der Einrichtung zur Verstellung des Aufgabepunktes zu einer wenigstens einmaligen Hin- und Herbewegung zwischen zwei Anschlagpositionen desselben, um das mit der Dosieröffnung ausgestattete Dosierteil zwischen zwei Endpositionen hin und her zu verlagern. Das mit der Dosieröffnung versehene Dosierteil der Dosiereinrichtung wird in diesem Fall über den größtmöglichen Bereich seiner Verlagerbarkeit entlang der mit der Auslauföffnung versehenen Unterseite des Behälters hin und her bewegt, um auch randseitig abgelagerte Reste an Streugutpartikeln über die Dosieröffnung aus dem Behälter austragen zu können.

Wie eingangs erwähnt, kann es sich bei der aktuatorischen Hin- und Herverlagerung des mit der Dosieröffnung ausgestatteten Dosierteils je nach Lagerung desselben um eine translatorische Bewegung und/oder vorzugsweise um eine Drehbewegung, insbesondere um eine im Wesentlichen vertikale Drehachse, handeln, welche z.B. mit der Drehachse des Verteilorgans zusammenfallen kann.

Gemäß einer vorteilhaften Weiterbildung der Erfindung kann vorgesehen sein, dass die Steuereinheit ferner ein der Auslassöffnung zugeordnetes Rührwerk im Behälterinnern in Rotation versetzt, wenn sie den Aktuator der Einrichtung zur Verstellung des Aufgabepunktes zu der wenigstens einmaligen Hin- und Herbewegung veranlasst. Aufgrund des in das Bedienmodul der Steuereinheit eingegebenen Befehls und/oder aufgrund des von der Füllstandserfassungseinrichtung erfassten leeren Zustandes des Behälters veranlasst die Steuereinheit folglich ferner, dass das im Behälterinnern befindliche Rührwerk, welches als solches im Hinblick auf ein einwandfreies Nachfließen des Streugutes während der Streuarbeit bei gattungsgemäßen Verteilmaschinen gebräuchlich ist (vgl. z.B. die eingangs zitierten DE 10 2007 053 550 A1 oder DE 10 2005 015 228 A1), in Betrieb gesetzt wird. Etwaige, im Umkreis der Auslauföffnung und/oder der Dosieröffnung des Dosierteils befindlichen Reste an Streugut, welche die Dosieröffnung des Dosierteils anlässlich seiner erfindungsgemäßen Hin und Herverlagerung nicht zu überstreichen vermag, können auf diese Weise mittels des Rührwerks in Richtung der Auslauföffnung an der Unterseite des Behälters und hin zu der hin und her "wandernden" Dosieröffnung des Dosierteils gefördert werden, so dass auch solche, an schwer zugänglicher Stelle abgelagerten Restmengen an Streugut aus dem Behälter abgeführt werden können. Während das Rührwerk grundsätzlich selbstverständlich auch um eine etwa horizontale oder um eine in Bezug auf Horizontale unter einem endlichen Winkel geneigt angeordnete Achse umlaufen kann, kann es vorteilhaft sein, wenn das Rührwerk eine im Wesentlichen vertikale, insbesondere koaxial zur Drehachse des Verteilorgans angeordnete, Rotationsachse aufweist.

Sofern die Dosiereinrichtung mit der Steuereinheit in Wirkverbindung steht, wie es bei gattungsgemäßen Verteilmaschine zur Steuerung bzw. Regelung des Massenstromes an Streugut in Abhängigkeit von der gewünschten Arbeitsbreite, der Fahrgeschwindigkeit und/oder den physikalischen Eigenschaften des Streugutes, insbesondere dessen Rieselfähigkeit, in aller Regel der Fall ist, ist es zweckmäßig, wenn die Steuereinheit ferner einen Antrieb des Dosierschiebers veranlasst, den Dosierschieber in eine Öffnungsstellung zu überführen, in welcher er die Dosieröffnung des Dosierteils insbesondere im Wesentlichen gänzlich, freigibt, wenn sie den Aktuator der Einrichtung zur Verstellung des Aufgabepunktes (bedarfsweise und/oder automatisch) zu der wenigstens einmaligen Hin- und Herbewegung veranlasst. Alternativ kann selbstverständlich auch eine z.B. manuelle Überführung des Dosierschiebers in seine Öffnungsstellung erfolgen, bevor oder während der erfindungsgemäße Restmengenentleervorgang durchgeführt wird.

In bevorzugter Ausführung kann vorgesehen sein, dass sich die Dosieröffnung über wenigstens 50%, insbesondere über wenigstens 75%, vorzugsweise über mehr als 90%, beispielsweise um praktisch 100%, des Abstandes zwischen den entgegengesetzten Rändern der Auslauföffnung an der Unterseite des Behälters quer zum Verlagerungsweg des mit der Dosieröffnung versehenen Dosierteils erstreckt. Infolge der steuerungstechnisch veranlassten, aktuatorischen Hin- und Herverlagerung der mit des Dosieröffnung versehenen Dosierteils überstreicht (bzw. "unterstreicht") die Dosieröffnung folglich zumindest einen Großteil, vorzugsweise die gesamte Fläche der demgegenüber größeren Auslauföffnung, um auf dem Dosierteil zurückgebliebene oder hierauf herab gefallene Reste an Streugut praktisch vollständig aus dem Behälter auszuschleusen.

Um für eine einfache und bequeme Eingabe des Steuerbefehls zum bedarfsweisen Starten des erfindungsgemäßen Entleervorgangs zu sorgen, kann das Bedienmodul der Steuereinheit beispielsweise einen auf eine vollständige Restmengenentleerung des Behälters gerichteten Menupunkt aufweisen, welcher die Eingabe des entsprechenden Befehls ermöglicht. Eine entsprechende Eingabeeinrichtung des Bedienmoduls kann herkömmlicher Bauart sein und z.B. eine Tastatur, ein Touchscreen, ein Spracheingabesystem oder dergleichen umfassen.

Gemäß einer Ausführungsvariante kann vorgesehen sein, dass die Steuereinheit ferner einen Antrieb des der Auslassöffnung zugeordneten Verteilorgans, z.B. einer Streu- bzw. Verteilerscheibe, stillsetzt, wenn sie den Aktuator der Einrichtung zur Verstellung des Aufgabepunktes bedarfsweise zu der wenigstens einmaligen Hin- und Herbewegung veranlasst. Auf diese Weise lässt sich eine mehr oder minder breite Verteilung der abgeführten Restmenge an Streugut in die Umgebung verhindern, was insbesondere dann von Vorteil ist, wenn die Restmenge aufgenommen und wiederverwendet werden soll.

Gemäß einer anderen Ausführungsvariante kann vorgesehen sein, dass die Steuereinheit ferner einen Antrieb des der Auslassöffnung zugeordneten Verteilorgans, z.B. einer Streu- bzw. Verteilerscheibe, aktiviert, wenn sie den Aktuator der Einrichtung zur Verstellung des Aufgabepunktes bedarfsweise zu der wenigstens einmaligen Hin- und Herbewegung veranlasst. Auf diese Weise lässt sich die abgeführte Restmenge an Streugut auf einfache Weise am Ort der Streuarbeit, beispielsweise auf einem Feld oder auf der Straße, verteilen.

Im letztgenannten Fall kann es überdies vorteilhaft sein, wenn die Steuereinheit ferner eine Meldung generiert, wenn sie den Aktuator der Einrichtung zur Verstellung des Aufgabepunktes bei aktiviertem Antrieb des Verteilorgans bedarfsweise zu der wenigstens einmaligen Hin- und Herbewegung veranlasst, wobei die Meldung insbesondere auf einer Anzeige des Bedienmoduls angezeigt und/oder akustisch wiedergegeben wird. Eine solche Meldung, welche sinngemäß "Vorsicht - Dosierorgan in Betrieb" oder dergleichen lauten kann, dient vornehmlich zur Warnung des Benutzers, dass aufgrund hoher Auswurfgeschwindigkeit der von dem Verteilorgan beschleunigten Reste an Streugut während des erfindungsgemäßen Restmengenentleervorgangs eine Verletzungsgefahr besteht, wenn er sich währenddessen in unmittelbarer Nähe der bewegten Verteilorgane aufhält.

Um beiden der vorgenannten Ausführungsvarianten Rechnung tragen, kann das Bedienmodul vorzugsweise eine Eingabe vorsehen, welche die Auswahl ermöglicht, ob der Antrieb des Verteilorgans bei der bedarfsweisen, wenigstens einmaligen Hin- und Herbewegung des Aktuators der Einrichtung zur Verstellung des Aufgabepunktes stillgesetzt oder aktiviert werden soll, wobei die Steuereinheit in Abhängigkeit der eingegebenen Auswahl den Antrieb des Verteilorgans stillsetzt bzw. aktiviert.

Der mit dem Dosierteil der Dosiereinrichtung in Verbindung stehende Aktuator der Einrichtung zur Verstellung des Aufgabepunktes kann beispielsweise von einem hydraulischen, pneumatischen, hydropneumatischen oder insbesondere elektrischen Stellzylinder gebildet sein, wie es als solches aus dem Stand der Technik bekannt ist.

Wie bereits angedeutet, muss die erfindungsgemäß Verteilmaschine selbstverständlich nicht nur ein(e), sondern kann auch mehrere, insbesondere zwei, Auslauföffnungen, Dosiereinrichtungen, Einrichtungen zur Verstellung des Aufgabepunktes und Verteilorgane aufweisen, wobei die Steuereinheit insbesondere
- den Aktuator einer jeden Einrichtung zur Verstellung des Aufgabepunktes oder
- einen den Einrichtungen zur Verstellung des Aufgabepunktes gemeinsamen Aktuator
zu einer wenigstens einmaligen Hin- und Herbewegung veranlasst, um die mit den Dosieröffnungen ausgestatteten Dosierteile aller Auslauföffnungen zwischen zwei verschiedenen Positionen hin und her zu verlagern,
- wenn die Steuereinheit den entsprechenden, in ihr Bedienmodul eingegebenen Befehl empfängt; und/oder
- wenn die mit der Steuereinheit in Wirkverbindung stehende Füllstands- und/oder Massenstromerfassungseinrichtung detektiert hat, dass der Behälter entleert worden ist und/oder bei geöffnetem Dosierschieber ein allenfalls minimaler oder kein Massenstrom an Streugut die Dosieröffnung durchsetzt.

Sofern eine derartige Verteilmaschine, wie üblich, auch zwei Behälter oder einen Behälter mit zwei voneinander getrennten Behälterteilen aufweist, kann es zumindest dann, wenn die Steuereinheit einen den Einrichtungen zur Verstellung des Aufgabepunktes gemeinsamen Aktuator umfasst, zweckmäßig sein, wenn dieser Aktuator nur dann zu den Hin- und Herbewegungen veranlasst wird, wenn beide Behälter(teile) gänzlich entleert worden sind, um den Streubetrieb des noch (teilweise) befüllten Behälter(teil)s nicht zu beeinträchtigen.

Darüber hinaus ist es hinsichtlich einer möglichst vollständigen Restmengenentleerung des Streugutbehälters freilich zweckmäßig, wenn sich der Behälter (oder die Behälter bzw. die Behälterkammern ein und desselben Behälters) in Richtung der Auslauföffnung im Wesentlichen trichterförmig verjüngt bzw. verjüngen.

Überdies hat es sich aus den eingangs in Verbindung mit der DE 10 2005 015 228 A1 erwähnten Gründen als günstig erwiesen, wenn ein an der Unterseite des Behälters angeordneter, mit der Auslauföffnung versehener Boden des Behälters einen im Wesentlichen "V"-förmigen Umfang mit abgerundetem "V"-Scheitel aufweist, wobei der Krümmungsradius des "V"-Scheitels etwa deckungsgleich mit dem Wirkkreis der Rührfinger des Rührwerks angeordnet ist, wobei die Auslauföffnung in einem dem "V"-Scheitel gegenüberliegenden, erweiterten Bereich des "V"-förmigen Bodens angeordnet ist. Der abgerundete "V"-Scheitel des Behälterbodens kann hierbei vorzugsweise etwa konzentrisch zur Drehachse des - um eine vertikale Rotationsachse umlaufenden - Rührwerks angeordnet sein.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische perspektivische Ansicht einer Ausführungsform einer erfindungsgemäßen Verteilmaschine in Form eines Zweischeibenstreuers;
- Fig. 2: eine schematische perspektivische Detailansicht eines an der Unterseite einer Behälterkammer des Behälters der Verteilmaschine gemäß Fig. 1 angeordneten Bodens mit der Auslauföffnung von oben;
- Fig. 3: eine Draufsicht auf die unterhalb des Behälters der Verteilmaschine gemäß Fig. 1 und 2 befindlichen Funktionsteile, insbesondere der Einrichtung zur Verstellung des Aufgabepunktes des Streugutes auf die Verteilorgane, bei abgenommenem Behälter;
- Fig. 4: eine schematische perspektivische Ansicht der unterhalb des Behälters befindlichen Funktionsteile entsprechend der Ausgestaltung gemäß Fig. 3;
- Fig. 5: eine der Fig. 3 entsprechende Draufsicht auf die Funktionsteile der Verteilmaschine mit einer gegegenüber der Ausgestaltung gemäß Fig. 3 abgewandelten Ausgestaltung der Einrichtung zur Verstellung des Aufgabepunktes; und
- Fig. 6: eine schematische perspektivische Ansicht der unterhalb des Behälters befindlichen Funktionsteile entsprechend der Ausgestaltung gemäß Fig. 5.

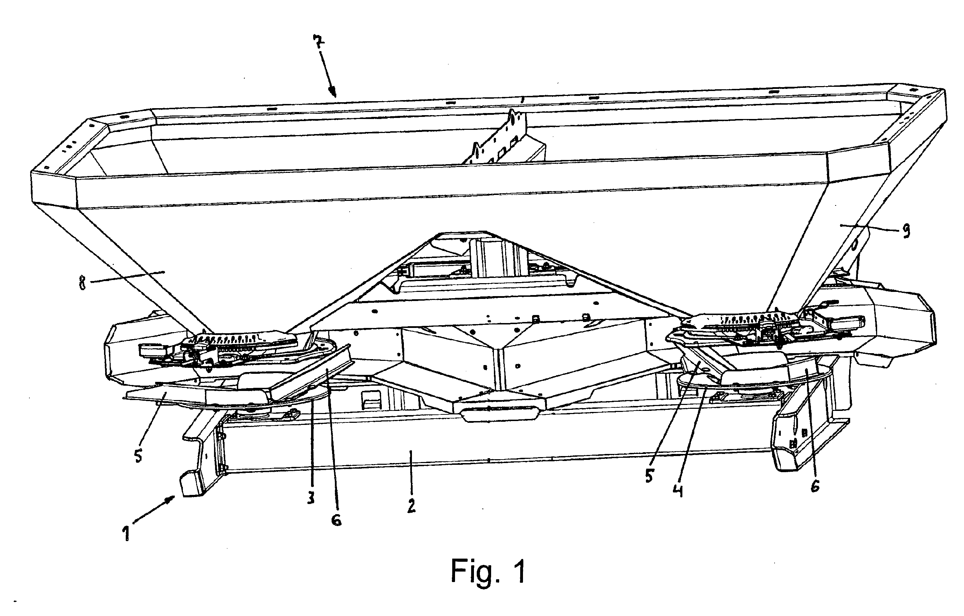

In Fig. 1 ist eine Ausführungsform einer erfindungsgemäßen Verteilmaschine in Form einer als Zweischeibenstreuer ausgebildeten, landwirtschaftlichen Streumaschine exemplarisch wiedergegeben. Die Verteilmaschine weist einen Rahmen 1 mit einer Quertraverse 2 auf, welche z.B. im Falle eines von der Zapfwelle einer Zugmaschine, wie eines Traktors, abgeleiteten mechanischen Antriebs der in Form von Verteilerscheiben ausgebildeten Verteilorgane 3, 4, welche mit Wurfschaufeln 5, 6 versehen sind, einen Quertrieb aufnimmt. Im Falle eines drehzahlregelbaren, hydraulischen oder elektrischen Antriebs sind z.B. die einem jeden Verteilorgan 3, 4 zugeordneten Hydraulik- bzw. Elektromotoren mit der Quertraverse 2 verbunden.

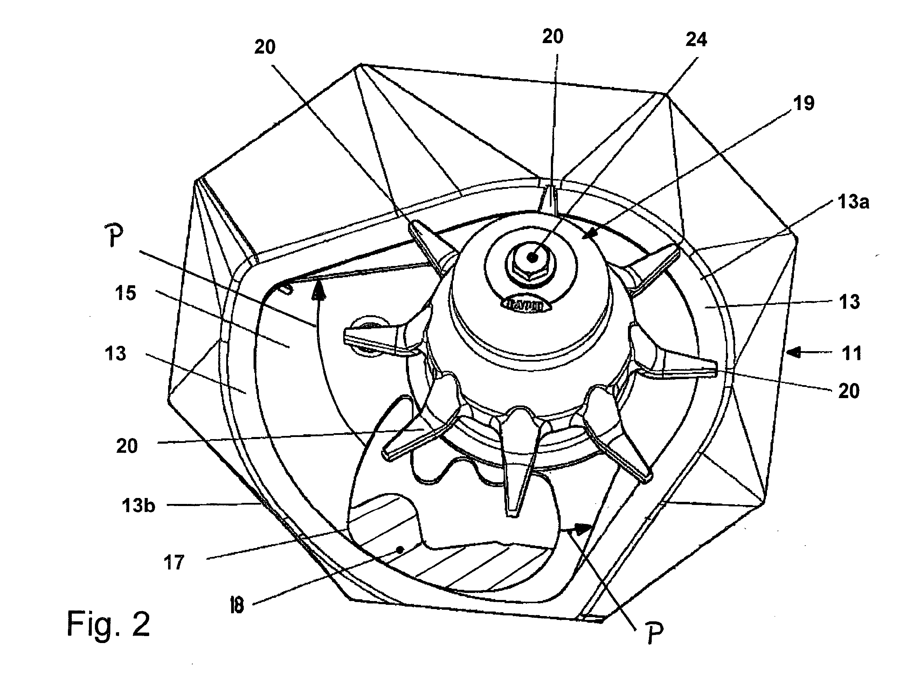

Die Verteilmaschine umfasst ferner einen Behälter 7, welcher im vorliegenden Fall mit zwei trichterförmigen Behälterteilen 8, 9 ausgestattet ist, welche sich im Wesentlichen trichterförmig nach unten verjüngen und an ihren Unterseiten beispielsweise jeweils in ein polygonal geformtes Unterteil 10, 11 mit je einer Auslauföffnung übergehen. Letztere ist beim vorliegenden Ausführungsbeispiel etwa ringförmig ausgestaltet und in einem diese umgrenzenden Boden 12, 13 exzentrisch angeordnet (vgl. Fig. 2 bis 6). Wie insbesondere der Fig. 2 weiterhin zu entnehmen ist, ist unterhalb der ringförmigen, die Auslauföffnungen des Behälters 7 begrenzenden Böden 12, 13 jeweils eine Dosiereinrichtung vorgesehen, welche je ein, in der weiter unten erläuterten Weise mittels (je) einer Einrichtung zur Verstellung des Aufgabepunktes des Streugutes auf die Verteilorgane 3, 4 aktuatorisch hin und her bewegbares Dosierteil 14, 15 mit einer Dosieröffnung 16, 17 aufweist, deren freier Querschnitt mittels eines, insbesondere gleichfalls aktuatorisch betätigten, Dosierschiebers 18 zur Einstellung der Streumenge steuerbar ist.

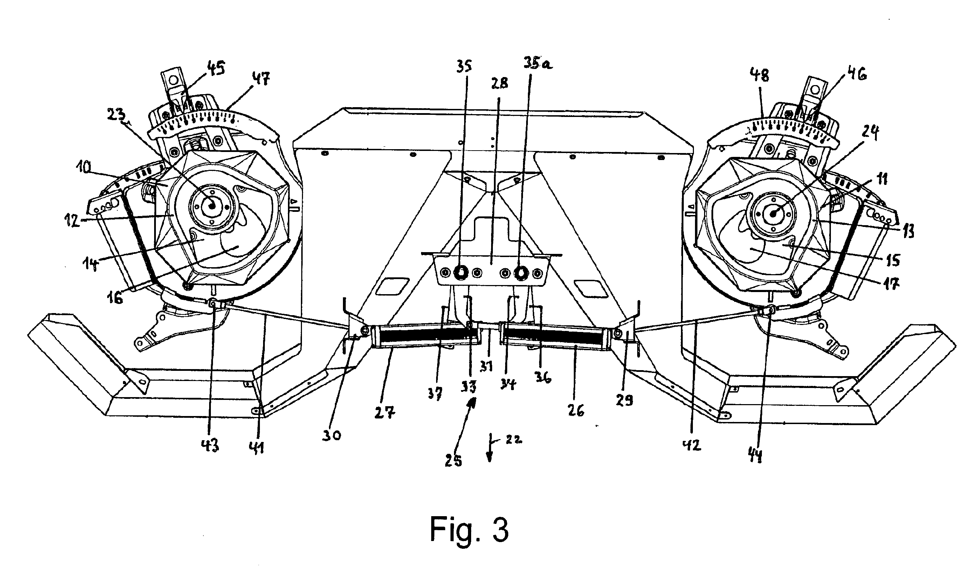

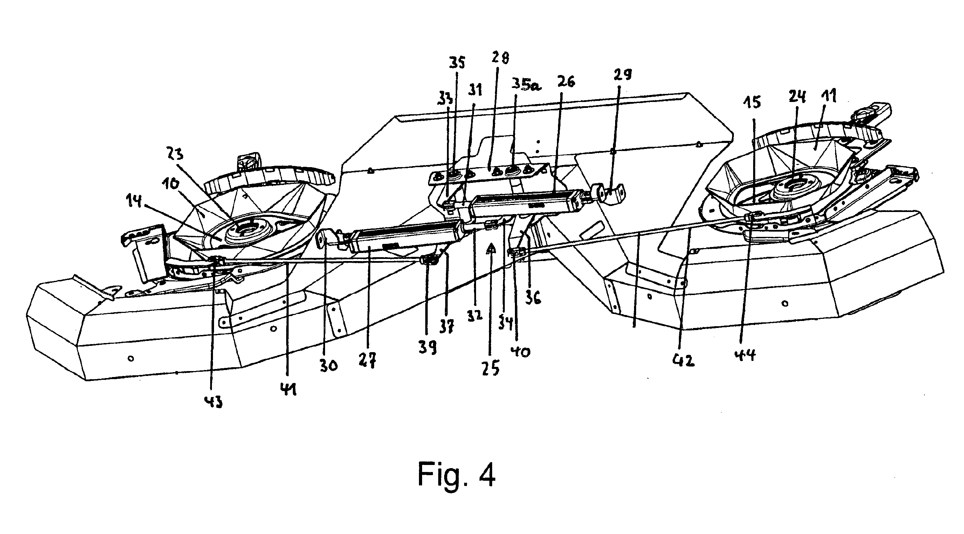

Wie aus Fig. 2 ferner ersichtlich, ist der Auslauföffnung eines jeden Behälterteils 8, 9 des Behälters 7 ein unmittelbar oberhalb eines jeden Bodens 12, 13 angeordnetes Rührwerk 19 zugeordnet, welches in der nachfolgenden Fig. 3 und 4 aus Veranschaulichungsgründen weggelassen worden ist und dessen vertikale Drehachse 23, 24 mit derjenigen der Verteilorgane 3, 4 (siehe Fig. 1) zusammenfällt. Die Drehachse 23, 24 des Rührwerks 8 kann beispielsweise in dem jeweiligen Boden 12, 13 gelagert und von einem im Übrigen nicht näher dargestellten, steuerbaren Antrieb drehangetrieben sein, wie er z.B. als solcher aus der DE 10 2005 015 228 A1 bekannt ist. Die Anordnung der Rührwerke 19 ist derart gewählt, dass der Raum unterhalb der in dem jeweiligen Boden 12, 13 angeordneten Auslauföffnung einerseits und dem zugehörigen Verteilorgan 3, 4 andererseits frei bleibt, so dass der Dünger behinderungsfrei auf das Verteilorgan 3, 4 gelangen kann. Auf diese Weise werfen die Verteilorgane bzw. die Verteilerscheiben 3, 4 (Fig. 1) mit den Enden ihrer Wurfschaufeln 5, 6 (Fig. 1) das Streugut in je einem Streufächer ab, welche sich teilweise überlappen und ein flach dreieckförmiges Streubild ergeben. Beim Ansschlussfahren entsteht hieraus eine lineare Verteilung. Das eine Verteilorgan 3, 4 wirft das Streugut bis etwa auf die halbe Arbeitsbreite auf die andere Seite, so dass auch ein Grenzstreuen möglich ist. Indes lässt sich die vorliegende Erfindung auch in jede andere Bauart eines Ein- oder Zweischeibenstreuers für landwirtschaftliche oder winterdienstliche Zwecke implementieren.

Das polygonal, z.B. achteckig, ausgestaltete Unterteil 10, 11 geht an seiner Unterkante in den ringförmigen, die Auslauföffnung begrenzenden Boden 12, 13 über, oberhalb dessen das Rührwerk 19 mit sich im Wesentlichen radial erstreckenden Rührfingern 20 um die Drehachse 23, 24 umläuft. Jeder Boden 12, 13 weist einen etwa "V"-förmigen Umfang mit abgerundetem "V"-Scheitel 13a auf, welcher im vorliegenden Fall durch einen entsprechenden Krümmungsradius relativ stark verrundet ist, wobei der Mittelpunkt des Krümmungsradius' des "V"-Scheitels 13a auf der Drehachse 23, 24 des Rührwerks 19 liegt. Die vornehmlich in Radialrichtung von der Drehachse 23, 24 eines jeweiligen Rührwerks 19 vorstehenden Rührfinger 20 bzw. deren Wirkkreis fällt etwa mit dem Krümmungsradius des "V"-Scheitels 13a des Bodens 12, 13 zusammen. An der diesem teilkreisförmigen "V"-Scheitel 13a des Bodens 12, 13 gegenüberliegenden Seite weist der Boden 12, 13 gleichfalls einen kreisbogenförmigen Abschluss 13b auf. Der Radius dieses kreisbogenförmigen Abschnittes 13b ist nennenswert größer als der Krümmungsradius des "V"-Scheitels 13a. Beide sind durch etwa lineare Abschnitte miteinander verbunden, welche die "V"-Schenkel der "V"-förmigen Bodenumfangs bilden. Wie bereits erwähnt, umgrenzt der ringförmige Boden 12, 13 die großflächige Auslauföffnung, welche in dem dem "V"-Scheitel 13a gegenüberliegenden, erweiterten, dem kreisbogenförmigen Abschnitt 13b nahen Bereich des Bodens 12, 13 exzentrisch angeordnet ist und deren Öffnungskante einen kreisbogenförmigen Abschnitt großen Durchmessers (in Fig. 2 links) und einen gleichfalls kreisbogenförmigen Abschnitt demgegenüber kleineren Durchmessers (in Fig. 2 rechts) sowie diese verbindende, etwa lineare Abschnitte aufweist. Die auf diese Weise durch den ringförmigen Boden 12, 13 begrenzte Auslauföffnung nimmt vorzugsweise mehr als 50% der Gesamtfläche des Bodens 12, 13 ein. Unterhalb der Auslauföffnung ist das mit der Dosieröffnung 16, 17 versehene - beim vorliegenden Ausführungsbeispiel etwa plattenförmige - Dosierteil 14, 15 der Dosiereinrichtung, welche mit dem Dosierschieber 18 blendenartig zusammenwirkt, mittels der weiter unten näher erläuterten Einrichtung zur Verstellung des Aufgabepunktes aktuatorisch hin und her verlagerbar, wobei diese Hin- und Herbewegung des plattenförmigen Dosierteils 14, 15 beim vorliegenden Ausführungsbeispiel eine Drehbewegung um die Achse 23, 24 - also koaxial zur Drehachse des Rührwerks 19 sowie koaxial zur Drehachse des Verteilorgans 3, 4 - ist (vgl. den Pfeil P in Fig. 2), um den Aufgabepunkt des Streugutes auf das Verteilorgan 3, 4 einstellen zu können. Der Dosierschieber 18 ist in Fig. 2 zur besseren Veranschaulichung schraffiert dargestellt. Die Dosieröffnung 16, 17 des Dosierteils 14, 15 erstreckt sich insbesondere über praktisch den gesamten Abstand zwischen dem in Fig. 2 linken, dem Rührwerk 19 abgewandten Rand und dem rechten, dem Rührwerk 19 zugewandten Rand der Auslauföffnung in dem an der Behälterunterseite angeordneten Boden 12, 13 quer zum Verlagerungsweg P des Dosierteils 14, 15. Die zentral innen angeordnete Kante der Dosieröffnung 16, 17 kann asymmetrisch wellenförmig ausgebildet, was dafür sorgt, dass sich in Verbindung mit dem von innen nach außen verstellbaren Dosierschieber 18 eine günstige Verteilung auch bei kleinen Massenströmen ergibt. Die Rührwerksfinger 20 des Rührwerks 19 überstreichen die Dosieröffnung 16, 17 nur im Bereich kleiner Massenströme, d.h. im Bereich der innenliegenden, wellenförmigen Kante der Dosieröffnung 16, 17. Der restliche Bereich der Dosieröffnung 16, 17 für große Massenströme, wie auch der außen angeordnete Bereich der Auslauföffnung werden von den Rührfingern 20 nicht erfasst.

Wie der Fig. 3 zu entnehmen ist, lassen sich zum Verlagern der durch die Lage der Dosieröffnungen 16, 17 der Dosierteile 14, 15 mit ihren Dosierschiebern 18 (siehe Fig. 2) bestimmten Aufgabepunkte auf die Verteilorgane 3, 4 die Dosierteile 14, 15 um ihr Drehzentrum 23, 24 verdrehen. Hierzu dient eine insgesamt mit dem Bezugszeichen 25 versehene Einrichtung zur Verstellung des Aufgabepunktes, welche im Falle der Fig. 3 je einen Aktuator 26, 27, z.B. in Form eines elektrischen Stellzylinders, und ein an einer Mittelkonsole 28 gelagertes Hebelgestänge umfasst. Die Aktuatoren 26, 27 und die Mittelkonsole 28 sind zwischen den Verteilorganen 3, 4 bzw. zwischen den Verteilerscheiben und in Bezug hierauf bzw. auf die vertikalen Drehachsen 23, 24 der Dosierteile 14, 15 der Dosiereinrichtungen in Fahrtrichtung 22 nach vorne versetzt angeordnet. Die z.B. von Elektrozylindern gebildeten Aktuatoren 26, 27 sind an ihrem einen Ende an je einer ortsfesten Konsole 29, 30 abgestützt und, wie Fig. 4 erkennen lässt, horizontal übereinander angeordnet.

Bei der in Fig. 3 und 4 wiedergegebenen Ausführungsvariante greift ein Betätigungselement 31, 32 eines jeden Aktuators 26, 27 an einem Schwenkhebel 33, 34 des Hebelgestänges an, welche jeweils am anderen Ende auf einen in der Mittelkonsole 28 drehbar gelagerten Zapfen 35, 35a wirken. Letzterer ist an seinem entgegengesetzten Ende jeweils mit einem Schwenkhebel 36, 37 verbunden, dessen Schwenkbewegung über ein Gelenk 39, 40 auf je eine, sich nach außen erstreckende Lenkerstange 41, 42 übertragbar ist, welche ihrerseits gelenkig an je einem der hin und her drehbaren Dosierteile 14, 15 der Dosiereinrichtungen angreift. Der in Fig. 4 obere Aktuator 26 wirkt über sein Betätigungselement 31 und das Hebelgestänge 33, 37 mit dem Drehzapfen 35 und der Lenkerstange 41 mit ihrem Gelenk 43 auf das in Fig. 3 und 4 links gezeigte Dosierteil 14 (in Fahrtrichtung 22 rechte Dosierplatte 14), während der untere Aktuator 27 über die analogen Hebel des Hebelgestänges auf das in der Zeichnung rechts wiedergegebene Dosierteil 15 wirkt.

Darüber hinaus kann vorgesehen sein, dass mit jedem hin und her drehbaren Dosierteil 14, 15 eine Positionsanzeige 45, 46, z.B. in Form eines Zeigers, verbunden ist, welcher mit einer behälterfesten Skala 47, 48 zusammenwirkt. Die Skalen 47, 48 sind mit einer die Lage des Aufgabepunktes repräsentierenden Skalierung versehen.

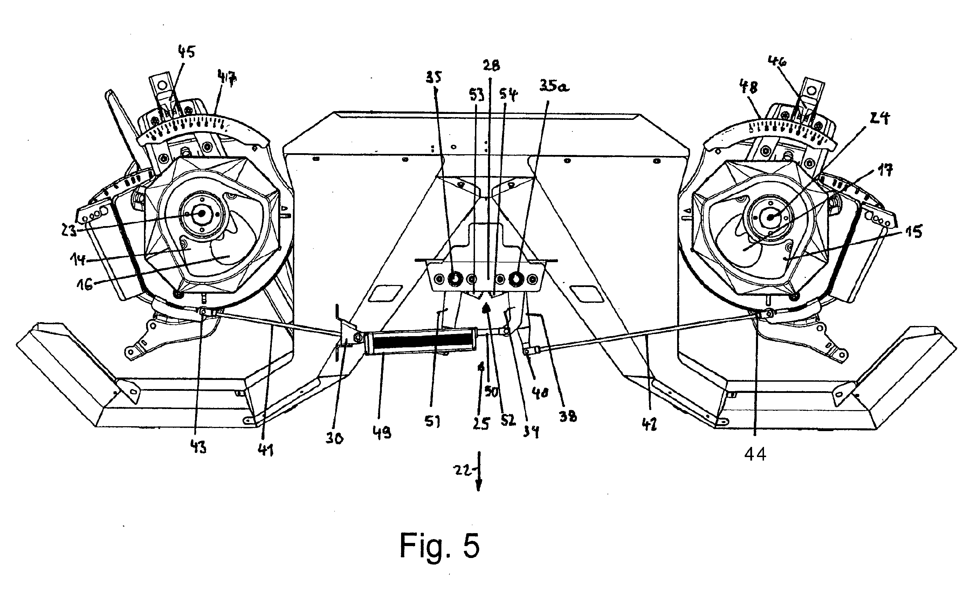

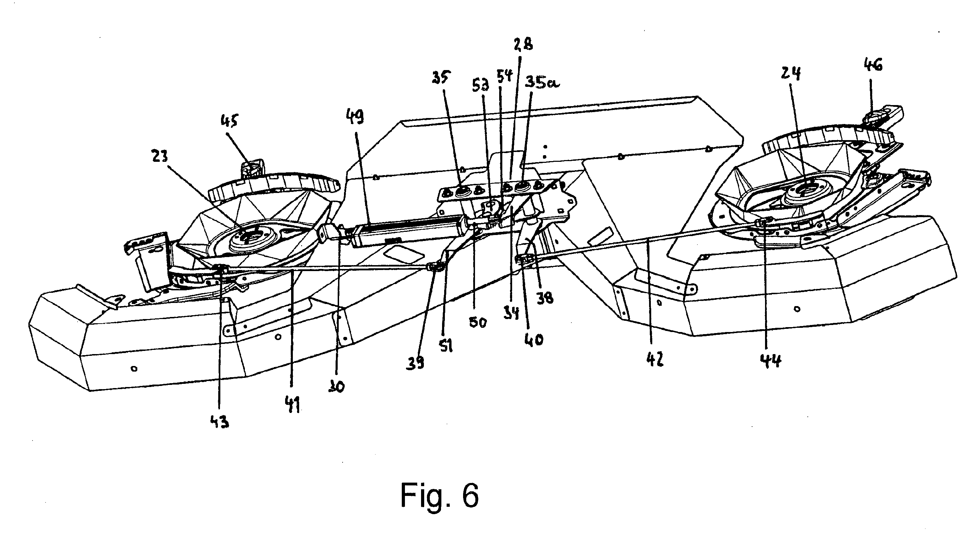

In den Fig. 5 und 6 sind identische bzw. funktionsgleiche Komponenten mit denselben Bezugszeichen versehen. Die in Fig. 5 und 6 wiedergegebene Ausgestaltung der Einrichtung 25 zur Verstellung des Aufgabepunktes unterscheidet sich von der gemäß Fig. 3 und 4 dadurch, dass sie nur einen einzigen, wiederum beispielsweise in Form eines, insbesondere elektrischen, Stellzylinders ausgebildeten Aktuator 49 umfasst, welcher zur rotatorischen Hin- und Herbewegung der Dosierteile 14, 15 beider Dosiereinrichtungen zugleich dient. Der Aktuator 49 wirkt mit seinem Betätigungselement 50 auf den mit dem in der Mittelkonsole 28 drehbaren Zapfen 35a verbundenen Schwenkhebel 34. Auf dem drehbaren Zapfen 35a sitzt wiederum der Schwenkhebel 38, welcher beim Punkt 40 gelenkig an der Lenkerstange 42 angreift, welche wiederum über ihr Gelenk 44 das in Fig. 5 und 6 rechte Dosierteil 15 verstellt. Insoweit entspricht die Einrichtung 25 zur Verstellung des Aufgabepunktes mit dem Aktuator 49 und dem Hebelgestänge demjenigen Teil der Einrichtung 25 gemäß Fig. 3 und 4 mit dem Aktuator 27 und den von dessen Betätigungselement 32 bewegten Teilen des Hebelgestänges (die gleichen Bezugszeichen für das Hebelgestänge sind daher übernommen worden). Abweichend von der Ausführungsform gemäß Fig. 3 und 4 sind hier jedoch die beiden Schwenkhebel 34 und 51, von welchen letzterer die Lenkerstange 41 für das hin und her drehbare (in Fig. 5 und 6 linke) Dosierteil 14 antreibt, über eine Koppel 52 miteinander verbunden, welche bei der gezeigten Ausführungsform von zwei miteinander kämmenden Stirnradsegmenten 53, 54 gebildet ist. Die Stirnradsegmente 53, 54 sitzen jeweils auf den Drehzapfen 35, 35a, so dass sie deren Drehbewegung mitmachen und für einen Synchronlauf der vom Stellweg des Aktuators 49 eingeleiteten Schwenkbewegung der Schwenkhebel 34, 51 bzw. des Stellwegs der Lenkerstangen 41, 42 sorgen.

Die Steuerung bzw. Regelung der Verteilmaschine während der Streuarbeit erfolgt mittels einer nicht zeichnerisch dargestellten, programmtechnisch eingerichteten Steuereinheit, welche sowohl die Dosierschieber 18 der Dosiereinrichtungen als auch die mit den Dosierteilen 14, 15 in Verbindung stehenden Aktuatoren 26, 26 bzw. 49 der Einrichtungen 25 zur Verstellung des Aufgabepunktes während der Streuarbeit in Abhängigkeit von der Arbeitsbreite, der Fahrtgeschwindigkeit und der physikalischen Eigenschaften des Streugutes steuert bzw. regelt und ferner auch zumindest zur automatischen An-/Abschaltung der Rührwerke 19 dienen kann. Die Steuereinheit umfasst ein ebenfalls zeichnerisch nicht wiedergegebenes Bedienmodul, welche beispielsweise im Führerhaus einer Zugmaschine (ebenfalls nicht gezeigt), wie eines Traktors, angeordnet sein kann und eine Eingabeeinrichtung aufweist, um die gewünschten Steuer- bzw. Regelparameter eingeben zu können.

Um für eine wirksame Entleerung von in den Behälterteilen 8, 9 des Behälters 7 zurückgebliebenen Resten an Streugut zu sorgen, vermag die Steuereinheit die Aktuatoren 25, 26 bzw. 49 der Einrichtungen 25 zur Verstellung des Aufgabepunktes nicht nur - wie es beim "normalen" Streubetrieb der Fall ist - derart zu betätigen, dass der Aufgabepunkt auf die Verteilorgane 3, 4 entsprechend der gewünschten Arbeitsbreite elektronisch geregelt wird, sondern sie vermag die Aktuatoren 25, 26 bzw. 49 auch
- bedarfsweise, auf einen entsprechenden, in ihr Bedienmodul eingegebenen Befehl der Art "Restmenge entleeren" hin, und/oder
- automatisch, wenn eine mit der Steuereinheit verbundene Füllstands- und/oder Massenstromerfassungseinrichtung (nicht gezeigt), z.B. in Form einer Behälterwaage, eines Drehmoment-, Torsions- oder Drucksensors eines hydraulischen Antriebs der Verteilorgane 3, 4, erkannt hat, dass die Behälterteile 8, 9 des Behälters 7 entleert worden sind bzw. bei geöffnetem Dosierschieber 18 ein allenfalls minimaler oder kein Massenstrom an Streugut die Dosieröffnungen 16, 17 durchsetzt,
zu einer insbesondere mehrmaligen, z.B. drei bis fünfmaligen, Hin- und Herbewegung zu veranlassen, so dass die mit der jeweiligen Dosieröffnung 16, 17 ausgestatteten Dosierteile 14, 15 der Dosiereinrichtungen zwischen zwei verschiedenen Positionen hin und her verlagert werden, wobei sie sich relativ zu der Auslauföffnung in dem jeweiligen Boden 12, 13 an den Unterseiten der Behälterteile 8, 9 um die vertikale Drehachse 24 drehen (vgl. insbesondere Fig. 2). Bei den beiden verschiedenen Positionen handelt es sich insbesondere um die Endpositionen der Dosierteile 14, 15, welche durch die Hin- und Herbewegung der Aktuatoren 25, 26 bzw. 49 zwischen ihren beiden Anschlagpositionen vorgegeben ist, so dass die Dosieröffnung 16, 17 des jeweiligen Dosierteils 14, 15 praktisch die gesamte Fläche der Auslauföffnung in Richtung des Pfeils P gemäß Fig. 2 mehrmals unterfährt, so dass jegliche, hierauf abgelagerte Streugutreste durch die offene Dosieröffnung 16, 17 abgeführt werden können. Zu diesem Zweck veranlasst die Steuereinheit zugleich den Antrieb der Dosierschieber 18, diese in ihre maximale Öffnungsstellung zu überführen, in welcher sie die Dosieröffnung 16, 17 des jeweiligen Dosierteils 14, 15 gänzlich freigeben. Darüber hinaus versetzt die Steuereinheit auch die Rührwerke 19 in Rotation, so dass auch Restmengen an Streugut, welche sich an der der Auslauföffnung entgegengesetzten - schmalen - Seite des Rührwerks 19 befinden (vgl. in Fig. 2 rechts des Rührwerks 19), von den Rührwerksfingern 20 in Richtung der Auslauflauföffnung gefördert werden und infolge reziprok hin und her gedrehter Dosierteile 14, 15 gänzlich durch deren Dosieröffnung 16, 17 aus dem jeweiligen Behälterteil 8, 9 abgeführt werden können.

Am Bedienmodul der Steuereinheit kann ferner vorzugsweise eine Eingabe möglich sein, welche dem Bediener, wenn er den vorgenannten Restmengenentleervorgang bedarfsweise durchführen möchte, eine Auswahl ermöglicht, ob der Antrieb der Verteilorgane 3, 4 während des Restmengenentleervorgangs stillgesetzt oder aktiviert werden soll, so dass die Steuereinheit in Abhängigkeit der eingegebenen Auswahl den Antrieb der Verteilorgane 3, 4 zu aktivieren oder stillzusetzen vermag. Die Auswahlmöglichkeiten können beispielsweise auf einer Anzeigeeinrichtung des Bedienmoduls angezeigt werden und sinngemäß "Verteilerscheiben blockieren" bzw. "Verteilerscheiben aktivieren" lauten, wobei der Bediener die gewünschte Auswahl durch Tastendruck, Anklicken oder dergleichen, eingeben kann. Die Steuereinheit vermag im Falle einer in ihr Bedienmodul eingegebenen Auswahl, wonach die Verteilorgane 3, 4 aktiviert werden sollen, insbesondere eine optische und/oder akustische Warnmeldung zu generieren, um den Bediener vor einer Verletzungsgefahr während des Fortschleuderns der restlichen Streugutpartikel zu warnen, sofern er sich während des Restmengenentleervorgangs in der Umgebung der Verteilorgane 3, 4 aufhält.

## Patentansprüche

1. Verteilmaschine, insbesondere landwirtschaftliche Streumaschine oder Winterdienststreumaschine, mit
- wenigstens einem Behälter (7; 8, 9) zur Aufnahme von pulver- und/oder partikelförmigem Streugut;
- wenigstens einer an der Unterseite des Behälters (7; 8, 9) angeordneten Auslauföffnung;
- wenigstens einer, mit der Auslauföffnung zusammenwirkenden Dosiereinrichtung mit einem, mit einer Dosieröffnung (16, 17) ausgestatteten Dosierteil (14, 15) und einem mit der Dosieröffnung (16, 17) zusammenwirkenden Dosierschieber (18), um die Dosieröffnung (16, 17) in einer Schließstellung des Dosierschiebers (18) gänzlich zu verschließen und in wenigstens einer Öffnungsstellung des Dosierschiebers (18) zumindest teilweise freizugeben;
- wenigstens einem unterhalb der Auslauföffnung und der Dosiereinrichtung angeordneten Verteilorgan (3, 4); und
- wenigstens einer Einrichtung (25) zur Verstellung des Aufgabepunktes des Streugutes auf das Verteilorgan (3, 4) mit wenigstens einem Aktuator (26, 27; 49), welcher zur Hin- und Herbewegung des mit der Dosieröffnung (16, 17) ausgestatteten Dosierteils (14, 15) der Dosiereinrichtung relativ zu dem Verteilorgan (3, 4) ausgebildet ist;
wobei zumindest der Aktuator (26, 27; 49) der Einrichtung (25) zur Verstellung des Aufgabepunktes mit einer programmtechnisch eingerichteten Steuereinheit in Wirkverbindung steht, **dadurch gekennzeichnet, dass** die Steuereinheit den Aktuator (26, 27; 49) der Einrichtung (25) zur Verstellung des Aufgabepunktes zu einer wenigstens einmaligen Hin- und Herbewegung veranlasst, um das mit der Dosieröffnung (16, 17) ausgestattete Dosierteil (14, 15) zwischen zwei verschiedenen Positionen relativ zu der Auslauföffnung hin und her zu verlagern,
- wenn die Steuereinheit einen entsprechenden, in ein Bedienmodul der Steuereinheit eingegebenen Befehl empfängt; und/oder
- wenn eine mit der Steuereinheit in Wirkverbindung stehende Füllstands- und/oder Massenstromerfassungseinrichtung detektiert hat, dass der Behälter (7; 8, 9) entleert worden ist und/oder bei geöffnetem Dosierschieber (18) ein allenfalls minimaler oder kein Massenstrom an Streugut die Dosieröffnung (16, 17) durchsetzt.

2. Verteilmaschine nach Anspruch 1, **dadurch gekennzeichnet, dass** die Füllstands- und/oder Massenstromerfassungseinrichtung aus der Gruppe
- Behälterwaage;
- Drehmomentsensor, welcher das Drehmoment wenigstens einer Welle im Antriebsstrang des Verteilorgans (3, 4) erfasst;
- Torsionssensor, welcher die Torsion wenigstens einer Welle im Antriebsstrang des Verteilorgans (3, 4) erfasst;
- Drucksensor, welcher den Druck in einem hydraulischen Antriebsstrang eines hydraulischen Antriebs des Verteilorgans (3, 4) erfasst; und
- Strom- oder Spannungssensor, welcher die Stromstärke oder die Spannung an einem elektrischen Antrieb des Verteilorgans (3, 4) erfasst,
gewählt ist.

3. Verteilmaschine nach Anspruch 1 oder 2, **dadurch gekennzeichnet, dass** die Steuereinheit den Aktuator (26, 27; 49) der Einrichtung (25) zur Verstellung des Aufgabepunktes zu einer mehrmaligen, insbesondere wenigstens zweimaligen, vorzugsweise wenigstens dreimaligen, Hin- und Herbewegung veranlasst, um das mit der Dosieröffnung (16, 17) ausgestattete Dosierteil (14, 15) mehrmals zwischen den beiden verschiedenen Positionen hin und her zu verlagern.

4. Verteilmaschine nach einem der Ansprüche 1 bis 3, **dadurch gekennzeichnet, dass** die Steuereinheit den Aktuator (26, 27; 49) der Einrichtung (25) zur Verstellung des Aufgabepunktes zu einer wenigstens einmaligen Hin- und Herbewegung zwischen zwei Anschlagpositionen desselben veranlasst, um das mit der Dosieröffnung (16, 17) ausgestattete Dosierteil (14, 15) zwischen zwei Endpositionen hin und her zu verlagern.

5. Verteilmaschine nach einem der Ansprüche 1 bis 4, **dadurch gekennzeichnet, dass** die Hin- und Herverlagerung des mit der Dosieröffnung (16, 17) ausgestatteten Dosierteils (14, 15) eine Drehbewegung, insbesondere um eine vertikale Drehachse (23, 24), ist.

6. Verteilmaschine nach einem der Ansprüche 1 bis 5, **dadurch gekennzeichnet, dass** die Steuereinheit ferner ein der Auslassöffnung zugeordnetes Rührwerk (19) im Behälterinnern in Rotation versetzt, wenn sie den Aktuator (26, 27; 49) der Einrichtung (25) zur Verstellung des Aufgabepunktes zu der wenigstens einmaligen Hin- und Herbewegung veranlasst.

7. Verteilmaschine nach Anspruch 6, **dadurch gekennzeichnet, dass** das Rührwerk (19) eine im Wesentlichen vertikale, insbesondere koaxial zur Drehachse (23, 24) des Verteilorgans (3, 4) angeordnete, Rotationsachse (23, 24) aufweist.

8. Verteilmaschine nach einem der Ansprüche 1 bis 7, **dadurch gekennzeichnet, dass** die Steuereinheit ferner einen Antrieb des Dosierschiebers (18) veranlasst, den Dosierschieber (18) in eine Öffnungsstellung zu überführen, in welcher er die Dosieröffnung (16, 17) des Dosierteils (14, 15), insbesondere im Wesentlichen gänzlich, freigibt, wenn sie den Aktuator (26, 27; 49) der Einrichtung (25) zur Verstellung des Aufgabepunktes zu der wenigstens einmaligen Hin- und Herbewegung veranlasst.

9. Verteilmaschine nach einem der Ansprüche 1 bis 8, **dadurch gekennzeichnet, dass** sich die Dosieröffnung (16, 17) über wenigstens 50%, insbesondere über wenigstens 75%, vorzugsweise über mehr als 90%, des Abstandes zwischen den Rändern der Auslauföffnung quer zum Verlagerungsweg (P) des Dosierteils (14, 15) erstreckt.

10. Verteilmaschine nach einem der Ansprüche 1 bis 9, **dadurch gekennzeichnet, dass** das Bedienmodul der Steuereinheit einen auf eine vollständige Restmengenentleerung des Behälters (7; 8, 9) gerichteten Menupunkt aufweist, welcher die Eingabe des entsprechenden Befehls ermöglicht.

11. Verteilmaschine nach einem der Ansprüche 1 bis 10, **dadurch gekennzeichnet, dass** die Steuereinheit ferner
- einen Antrieb des der Auslassöffnung zugeordneten Verteilorgans (3, 4) stillsetzt, oder
- einen Antrieb des der Auslassöffnung zugeordneten Verteilorgans (3, 4) aktiviert,
wenn sie den Aktuator (26, 27; 49) der Einrichtung (25) zur Verstellung des Aufgabepunktes zu der wenigstens einmaligen Hin- und Herbewegung veranlasst.

12. Verteilmaschine nach Anspruch 11, **dadurch gekennzeichnet, dass** die Steuereinheit den Antrieb des der Auslassöffnung zugeordneten Verteilorgans (3, 4) aktiviert und ferner eine Meldung generiert, wenn sie den Aktuator (26, 27; 49) der Einrichtung (25) zur Verstellung des Aufgabepunktes bei aktiviertem Antrieb des Verteilorgans (3, 4) zu der wenigstens einmaligen Hin- und Herbewegung veranlasst, wobei die Meldung insbesondere auf einer Anzeige des Bedienmoduls angezeigt und/oder akustisch wiedergegeben wird.

13. Verteilmaschine nach einem der Ansprüche 1 bis 12, **dadurch gekennzeichnet, dass** das Bedienmodul eine Eingabe vorsieht, welche die Auswahl ermöglicht, ob der Antrieb des Verteilorgans (3, 4) bei der wenigstens einmaligen Hin- und Herbewegung des Aktuators (26, 27; 49) der Einrichtung (25) zur Verstellung des Aufgabepunktes stillgesetzt oder aktiviert werden soll, wobei die Steuereinheit in Abhängigkeit der eingegebenen Auswahl den Antrieb des Verteilorgans (3, 4) stillsetzt bzw. aktiviert.

14. Verteilmaschine nach einem der Ansprüche 1 bis 13, **dadurch gekennzeichnet, dass** sie mehrere, insbesondere zwei, Auslauföffnungen, Dosiereinrichtungen, Einrichtungen (25) zur Verstellung des Aufgabepunktes und Verteilorgane (3, 4) aufweist, wobei die Steuereinheit insbesondere
- den Aktuator (26, 27) einer jeden Einrichtung (25) zur Verstellung des Aufgabepunktes oder
- einen den Einrichtungen (25) zur Verstellung des Aufgabepunktes gemeinsamen Aktuator (49)
zu einer wenigstens einmaligen Hin- und Herbewegung veranlasst, um die mit den Dosieröffnungen (16, 17) ausgestatteten Dosierteile (14, 15) aller Auslauföffnungen zwischen zwei verschiedenen Positionen hin und her zu verlagern,
- wenn die Steuereinheit den entsprechenden, in ihr Bedienmodul eingegebenen Befehl empfängt; und/oder
- wenn die mit der Steuereinheit in Wirkverbindung stehende Füllstands- und/oder Massenstromerfassungseinrichtung detektiert hat, dass der Behälter (7; 8, 9) entleert worden ist und/oder bei geöffneten Dosierschiebern (18) ein allenfalls minimaler oder kein Massenstrom an Streugut die Dosieröffnungen (16, 17) durchsetzt.

15. Verteilmaschine nach einem der Ansprüche 1 bis 14, **dadurch gekennzeichnet, dass** ein mit der Auslauföffnung versehener Boden (12, 13) des Behälters (7; 8, 9) einen im Wesentlichen "V"-förmigen Umfang mit abgerundetem "V"-Scheitel (13a) aufweist, wobei der Krümmungsradius des "V"-Scheitels (13a) etwa deckungsgleich mit dem Wirkkreis der Rührfinger (20) des Rührwerks (19) angeordnet ist, wobei die Auslauföffnung in einem dem "V"-Scheitel (13a) gegenüberliegenden, erweiterten Bereich (13b) des "V"-förmigen Bodens (12, 13) angeordnet ist.

## Claims

1. Distribution machine, in particular agricultural spreader or winter grit spreader, having
- at least one container (7; 8, 9) for holding material to be spread, in the form of a powder and/or particles;
- at least one discharge opening which is arranged on the underside of the container (7; 8, 9);
- at least one metering device which interacts with the discharge opening and has a metering component (14, 15) equipped with a metering opening (16, 17), and a metering slide (18) which interacts with the metering opening (16, 17), in order to close the metering opening (16, 17) entirely in a closed position of the metering slide (18), and can be at least partially opened in at least one open position of the metering slide (18);
- at least one distribution element (3, 4) which is arranged underneath the discharge opening and the metering device; and
- at least one device (25) for adjusting the point of application of the material to be spread onto the distribution element (3, 4) with at least one actuator (26, 27; 49) which is designed to make the metering component (14, 15), equipped with the metering opening (16, 17), of the metering device move to and fro relative to the distribution element (3, 4) ;
wherein at least the actuator (26, 27; 49) of the device (25) for adjusting the point of application is operatively connected to a control unit configured by a program, **characterized in that** the control unit causes the actuator (26, 27; 49) of the device (25) for adjusting the point of application with respect to an at least single to and fro movement, in order to move the metering component (14, 15), equipped with the metering opening (16, 17), to and fro between two different positions relative to the discharge opening,
- when the control unit receives a corresponding instruction which is input into an operator control module of the control unit; and/or
- when a filling level and/or mass flow detection device which is operatively connected to the control unit has detected that the container (7; 8, 9) has been emptied, and/or an, at the most, minimum mass flow of material to be spread, or non of said material at all, passes through the metering opening (16, 17) when the metering slide (18) is opened.

2. Distribution machine according to Claim 1, **characterized in that** the filling level and/or mass flow detection device is selected from the group
- container scales;
- torque sensor which detects the torque of at least one shaft in the drivetrain of the distribution element (3, 4);
- torsion sensor which detects the torsion of at least one shaft in the drivetrain of the distribution element (3, 4);
- pressure sensor which detects the pressure in a hydraulic drivetrain of a hydraulic drive of the distribution element (3, 4); and
- current sensor or voltage sensor which detects the current strength or the voltage at an electric drive of the distribution element (3, 4).

3. Distribution machine according to Claim 1 or 2, **characterized in that** the control unit causes the actuator (26, 27; 49) of the device (25) for adjusting the point of application with respect to a repeated to and fro movement, in particular an at least double, preferably at least triple, to and fro movement, in order to move the metering component (14, 15), equipped with the metering opening (16, 17), to and fro repeatedly between the two different positions.

4. Distribution machine according to one of Claims 1 to 3, **characterized in that** the control unit causes the actuator (26, 27; 49) of the device (25) for adjusting the point of application with respect to an at least single to and fro movement between two stop positions thereof, in order to move the metering component (14, 15), equipped with the metering opening (16, 17), to and fro between two end positions.

5. Distribution machine according to one of Claims 1 to 4, **characterized in that** the to and fro movement of the metering component (14, 15), equipped with the metering opening (16, 17), is a rotational movement, in particular about a vertical rotational axis (23, 24).

6. Distribution machine according to one of Claims 1 to 5, **characterized in that** the control unit also causes an agitator mechanism (19) assigned to the discharge opening in the interior of the container to rotate when it causes the actuator (26, 27; 49) of the device (25) for adjusting the point of application with respect to the at least single to and fro movement.

7. Distribution machine according to Claim 6, **characterized in that** the agitator mechanism (19) has a rotational axis (23, 24) which is essentially vertical, in particular arranged coaxially with respect to the rotational axis (23, 24) of the distribution element (3, 4).

8. Distribution machine according to one of Claims 1 to 7, **characterized in that** the control unit also causes a drive of the metering slide (18) to move the metering slide (18) into an open position in which it, in particular essentially entirely, opens the metering opening (16, 17) of the metering component (14, 15) when it causes the actuator (26, 27; 49) of the device (25) for adjusting the point of application with respect to the at least single to and fro movement.

9. Distribution machine according to one of Claims 1 to 8, **characterized in that** the metering opening (16, 17) extends over at least 50%, in particular over at least 75%, preferably over more than 90%, of the distance between the edges of the discharge opening transversely with respect to the movement path (P) of the metering component (14, 15).

10. Distribution machine according to one of Claims 1 to 9, **characterized in that** the operator control module of the control unit has a menu item which is directed toward complete residual quantity emptying of the container (7; 8, 9) and which permits the inputting of the corresponding instructions.

11. Distribution machine according to one of Claims 1 to 10, **characterized in that** the control unit also
- deactivates a drive of the distribution element (3, 4) which is assigned to the discharge opening, or
- activates a drive of the distribution element (3, 4) which is assigned to the discharge opening,
when it causes the actuator (26, 27; 49) of the device (25) for adjusting the point of application with respect to the at least single to and fro movement.

12. Distribution machine according to Claim 11, **characterized in that** the control unit activates the drive of the distribution element (3, 4) assigned to the discharge opening and also generates a message when it causes the actuator (26, 27; 49) of the device (25) for adjusting the point of application when the drive of the distribution element (3, 4) is activated with respect to the at least single to and fro movement, wherein the message is displayed, in particular, on a display of the operator control module and/or reproduced acoustically.

13. Distribution machine according to one of Claims 1 to 12, **characterized in that** the operator control module provides an input which makes it possible to select whether the drive of the distribution element (3, 4) is to be deactivated or activated when the at least single to and fro movement of the actuator (26, 27; 49) of the device (25) for adjusting the point of application occurs, wherein the control unit deactivates or activates the drive of the distribution element (3, 4) as a function of the selection which is input.

14. Distribution machine according to one of Claims 1 to 13, **characterized in that** said machine has a plurality of, in particular two, discharge openings, metering devices, devices (25) for adjusting the point of application and distribution elements (3, 4), wherein the control unit causes, in particular,
- the actuator (26, 27) of each device (25) for adjusting the point of application or
- an actuator (49) which is common to the devices (25) for adjusting the point of application
with respect to an at least single to and fro movement, in order to move the metering components (14, 15), equipped with the metering openings (16, 17), of all the discharge openings to and fro between two different positions,
- when the control unit receives the corresponding instruction which is input into its operator control module; and/or
- when the filling level and/or mass flow detection device which is operatively connected to the control unit has detected that the container (7; 8, 9) has been emptied, and/or an, at the most, minimum mass flow of material to be spread, or non of said material at all, passes through the metering openings (16, 17) when the metering slides (18) are opened.

15. Distribution machine according to one of Claims 1 to 14, **characterized in that** a bottom (12, 13), provided with the discharge opening, of the container (7; 8, 9) has an essentially "V"-shaped circumference with a rounded "V"-apex (13a), wherein the radius of curvature of the "V"-apex (13a) is arranged approximately congruently with the effective radius of the agitator elements (20) of the agitator mechanism (19), wherein the discharge opening is arranged in an extended region (13b) of the "V"-shaped floor (12, 13), lying opposite the "V"-apex (13a).

## Revendications

1. Machine d'épandage, notamment machine d'épandage agricole ou machine d'épandage d'entretien hivernal, avec :
- au moins un réservoir (7 ; 8, 9) pour recevoir du produit dispersible sous forme de poudre et/ou de particules ;
- au moins une ouverture d'écoulement disposée au niveau du côté inférieur du réservoir (7 ; 8, 9) ;
- au moins un dispositif de dosage interagissant avec l'ouverture d'écoulement avec une partie de dosage (14, 15) équipée d'une ouverture de dosage (16, 17) et un poussoir de dosage (18) interagissant avec l'ouverture de dosage (16, 17), pour fermer entièrement l'ouverture de dosage (16, 17) dans une position de fermeture du poussoir de dosage (18) et la libérer au moins en partie dans au moins une position d'ouverture du poussoir de dosage (18) ;
- au moins un organe d'épandage (3, 4) disposé en dessous de l'ouverture d'écoulement et du dispositif de dosage ; et
- au moins un dispositif (25) servant au réglage du point d'évacuation du produit dispersible sur l'organe d'épandage (3, 4) avec au moins un actionneur (26, 27 ; 49) réalisé pour effectuer un mouvement de va-et-vient de la partie de dosage (14, 15), équipée de l'ouverture de dosage (16, 17), du dispositif de dosage par rapport à l'organe d'épandage (3, 4) ;
au moins l'actionneur (26, 27 ; 49) du dispositif (25) servant au réglage du point d'évacuation étant en liaison active avec une unité de commande conçue selon une technique de programme, **caractérisée en ce que** l'unité de commande enclenche l'actionneur (26, 27 ; 49) du dispositif (25) servant au réglage du point d'évacuation pour réaliser au moins une fois un mouvement de va-et-vient, pour déplacer selon un mouvement de va-et-vient la partie de dosage (14, 15) équipée de l'ouverture de dosage (16, 17) entre deux positions différentes par rapport à l'ouverture d'écoulement ;
- lorsque l'unité de commande reçoit un ordre correspondant donné dans un module d'utilisateur de l'unité de commande ; et/ou
- lorsqu'un dispositif de détection d'état de remplissage et/ou de débit massique en liaison active avec l'unité de commande a détecté que le réservoir (7 ; 8, 9) est vide et/ou en cas de poussoir de dosage (18) ouvert, un débit massique minimal voire nulle de produit dispersible traverse l'ouverture de dosage (16, 17).

2. Machine d'épandage selon la revendication 1, **caractérisée en ce que** le dispositif de détection d'état de remplissage et/ou de débit massique est sélectionné dans le groupe suivant :
- balance de réservoir ;
- détecteur de couple de rotation détectant le couple de rotation d'au moins un arbre dans la chaîne cinématique de l'organe d'épandage (3, 4) ;
- capteur de torsion détectant la torsion d'au moins un arbre dans la chaîne cinématique de l'organe d'épandage (3, 4) ;
- capteur de pression détectant la pression dans une chaîne cinématique hydraulique d'un entraînement hydraulique de l'organe d'épandage (3, 4) ; et
- capteur de courant ou de tension détectant l'intensité du courant ou la tension au niveau d'un entraînement électrique de l'organe d'épandage (3, 4).

3. Machine d'épandage selon la revendication 1 ou 2, **caractérisée en ce que** l'unité de commande déclenche l'actionneur (26, 27 ; 49) du dispositif (25) servant au réglage du point d'évacuation jusqu'à réaliser plusieurs mouvements de va-et-vient, notamment au moins deux mouvements, de préférence au moins trois mouvements, pour déplacer plusieurs fois selon un mouvement de va-et-vient la partie de dosage (14, 15) équipée de l'ouverture de dosage (16, 17) entre les deux différentes positions.

4. Machine d'épandage selon l'une quelconque des revendications 1 à 3, **caractérisée en ce que** l'unité de commande déplace l'actionneur (26, 27 ; 49) du dispositif (25) servant au réglage du point d'évacuation pour réaliser au moins une fois un mouvement de va-et-vient entre deux positions de butée de celui-ci, pour déplacer selon un mouvement de va-et-vient la partie de dosage (14, 15) équipée de l'ouverture de dosage (16, 17) entre deux positions d'extrémité.

5. Machine d'épandage selon l'une quelconque des revendications 1 à 4, **caractérisée en ce que** le mouvement de va-et-vient de la partie de dosage (14, 15) équipée de l'ouverture de dosage (16, 17) est un mouvement de rotation, notamment autour d'un axe de rotation (23, 24) vertical.

6. Machine d'épandage selon l'une quelconque des revendications 1 à 5, **caractérisée en ce que** l'unité de commande fait en outre tourner un agitateur (19) associé à ouverture d'écoulement à l'intérieur du réservoir lorsqu'elle déclenche l'actionneur (26, 27 ; 49) du dispositif (25) servant au réglage du point d'évacuation pour l'amener à réaliser au moins une fois un mouvement de va-et-vient.

7. Machine d'épandage selon la revendication 6, **caractérisée en ce que** l'agitateur (19) comporte un axe de rotation (23, 24) disposé pour l'essentiel verticalement, notamment dans le plan coaxial par rapport à l'axe de rotation (23, 24) de l'organe d'épandage (3, 4).

8. Machine d'épandage selon l'une quelconque des revendications 1 à 7, **caractérisée en ce que** l'unité de commande déclenche en outre un entraînement du poussoir de dosage (18) pour guider le poussoir de dosage (18) dans une position d'ouverture dans laquelle il libère l'ouverture de dosage (16, 17) de la partie de dosage (14, 15), notamment pour l'essentiel entièrement, lorsque ladite unité déclenche l'actionneur (26, 27 ; 49) du dispositif (25) servant au réglage du point d'évacuation pour l'amener à réaliser au moins une fois un mouvement de va-et-vient.

9. Machine d'épandage selon l'une quelconque des revendications 1 à 8, **caractérisée en ce que** l'ouverture de dosage (16, 17) s'étend sur au moins 50 %, notamment sur au moins 75 %, de préférence sur plus de 90 %, de la distance entre les bords de l'ouverture d'écoulement, transversalement à la course de déplacement (P) de la partie de dosage (14, 15).

10. Machine d'épandage selon l'une quelconque des revendications 1 à 9, **caractérisée en ce que** le module d'utilisateur de l'unité de commande comporte un point de menu orienté sur un vidage complet de quantité restante du réservoir (7 ; 8, 9) et permettant la saisie de l'ordre correspondant.

11. Machine d'épandage selon l'une quelconque des revendications 1 à 10, **caractérisée en ce que** l'unité de commande permet en outre :
- d'arrêter un entraînement de l'organe d'épandage (3, 4) associé à l'ouverture d'échappement ; ou
- d'activer un entraînement de l'organe d'épandage (3, 4) associé à l'ouverture d'échappement ;
lorsqu'elle déclenche l'actionneur (26, 27 ; 49) du dispositif (25) servant au réglage du point d'évacuation pour l'amener à réaliser au moins une fois un mouvement de va-et-vient.

12. Machine d'épandage selon la revendication 11, **caractérisée en ce que** l'unité de commande active l'entraînement de l'organe d'épandage (3, 4) associé à l'ouverture d'échappement et génère en outre un message lorsqu'elle déclenche l'actionneur (26, 27 ; 49) du dispositif (25) servant au réglage du point d'évacuation lorsque l'entraînement de l'organe d'épandage (3, 4) est activé pour l'amener à réaliser au moins une fois un mouvement de va-et-vient, le message s'affichant notamment sur un affichage du module d'utilisateur et/ou étant retransmis acoustiquement.

13. Machine d'épandage selon l'une quelconque des revendications 1 à 12, **caractérisée en ce que** le module d'utilisateur prévoit une entrée permettant la sélection de si l'entraînement de l'organe d'épandage (3, 4) doit être arrêté ou activé lors de l'au moins un mouvement de va-et-vient de l'actionneur (26, 27 ; 49) du dispositif (25) servant au réglage du point d'évacuation, l'unité de commande arrêtant et/ou activant l'entraînement de l'organe d'épandage (3, 4) en fonction de la sélection entrée.

14. Machine d'épandage selon l'une quelconque des revendications 1 à 13, **caractérisée en ce qu'**elle comporte plusieurs ouvertures d'écoulement, dispositifs de dosage, dispositifs (25) servant au réglage du point d'évacuation et organes d'épandage (3, 4), notamment deux, l'unité de commande déclenchant notamment :
- l'actionneur (26, 27) de chaque dispositif (25) servant au réglage du point d'évacuation ;
- un actionneur (49) commun aux dispositifs (25) servant au réglage du point d'évacuation pour l'amener à réaliser au moins une fois un mouvement de va-et-vient, pour déplacer selon un mouvement de va-et-vient les parties de dosage (14, 15), équipées des ouvertures de dosage (16, 17), de toutes les ouvertures d'écoulement entre deux positions différentes ;
- lorsque l'unité de commande reçoit l'ordre correspondant donné dans son module d'utilisateur ; et/ou
- lorsque le dispositif de détection d'état de remplissage et/ou de débit massique relié activement à l'unité de commande a détecté que le réservoir (7 ; 8, 9) est vide et/ou que les poussoirs de dosage (18) sont ouverts, un débit massique minimal voire nulle de produit dispersible traverse les ouvertures de dosage (16, 17).

15. Machine d'épandage selon l'une quelconque des revendications 1 à 14, **caractérisée en ce qu'**un plancher (12, 13), pourvu de l'ouverture d'écoulement, du réservoir (7 ; 8, 9) présente une périphérie pour l'essentiel en forme de « V » avec des bords de « V » (13a) arrondis, le rayon de courbure du bord de « V » (13a) étant disposé tout comme le couvercle avec le circuit actif du doigt agitateur (20) de l'agitateur (19), l'ouverture d'écoulement étant disposée dans une région (13b) élargie opposée au bord de « V » (13a) du plancher en forme de « V » (12, 13).
